# EUROPEAN PATENT SPECIFICATION

(11) **EP 1 219 174 B1**
(45) Date of publication and mention of the grant of the patent: **27.09.2006**
(21) Application number: 00830875.1
(22) Date of filing: 29.12.2000
(51) Int. Cl.: A21D 13/00, A21D 8/02, A21C 11/00

(54) **Pizza base, a process and an apparatus for the production thereof**
Pizza, Verfahren und Vorrichtung dazu
Pizza, procédé et appareil pour sa production

(43) Date of publication of application: 03.07.2002
(73) Proprietor: Roncadin Bakery S.r.l., 33093 Meduno (Pordenone) (IT)
(72) Inventor: Bianchet, Daniele, 33087 Cordenons (Pordenone) (IT); Villalta, Luigi, 33080 Fiume Veneto (Pordenone) (IT); Mombelloni, Paolo, 33050 Pozzuolo del Friuli (Udine) (IT); Melosso, Gabriele, 33090 Tramonti di Sotto (Pordenone) (IT)
(74) Representative: Ferreccio, Rinaldo

(56) References cited:
- CH-A- 599 756
- US-A- 3 379 141
- US-A- 4 417 867
- US-A- 5 354 566

## Description

### Field of application

In its broader aspect, the present invention relates to the field of food industry.

In particular, the invention relates to a pizza endowed with particular crispness properties, a process for its production and an apparatus used in such a process.

### Technological background

Pizza is a food product which has experienced an ever increasing success and diffusion, both because it is very appreciated for its organoleptic characteristics and because it is a complete food from the nutritional point of view, further being in line with the dictates of the so-called "mediterranean diet" which has found a lot of support even in countries far away from the mediterranean region, such as, and particularly, the Unites States of America.

As well, it is known that the food industry has been trying for a long time to provide quick-preparation products which could be as close as possible, as far as their organoleptic characteristics are concerned, to the pizzas prepared extemporaneously and in a traditional way by the pizza makers.

On one end, the results obtained have been satisfying, in that pre-baked pizzas have been produced, adapted to be stored at refrigerator's temperature or deep-frozen, that after few minutes of baking in oven allow obtaining pizzas endowed with organoleptic characteristics with which consumers are pleased. However, the so obtained pizzas are still quite at a distance from the traditional pizzas, above all, as far as the crispness and palatability of the base of the dough are concerned.

The base of the dough prepared in a traditional way, that is, by hand, exhibits, once baked in the oven, very peculiar characteristics of texture, because it is crispy outside but rather spongy and soft inside, whereby the combination of these opposite characteristics offers an extremely pleasant sensation, which is very difficult to have repeated when the base is prepared by means of industrial equipment.

In the industry, the dough base is mostly prepared by rolling portions of already leavened base dough, thus obtaining dough disks of uniform thickness, which are then supplied to the oven pre-baking, whereupon the deposition of the topping (tomato sauce, cheese, oil and other optional ingredients) and the deep-freezing or the packaging under vacuum or modified atmosphere take place.

Then, when the deep-frozen pizza is baked in oven, in case after having been brought back to ambient temperature, the end product that is obtained has not the above-mentioned crispness/softness dichotomy with respect to the traditional pizza and is instead either too crispy and crumbly, or, more often, too soft and elastic.

Industrial processes for preparing a dough base for pizza have been devised that imitate as much as possible the operations carried out manually by the pizza maker.

However, the improvements regarding the consistency of the dough base so achieved on the one hand did not match up or even get close to the organoleptic properties of the bases prepared in a traditional way, and on the other hand have implied a relevant increase in the complexity of the equipment used and in the laboriousness of the preparation operating steps.

The problem at the basis of the present invention is therefore that of providing a pizza, prepared on an industrial scale and preservable through vacuum or modified atmosphere packaging, endowed with organoleptic and consistency characteristics comparable to those of the pizzas produced extemporaneously in a traditional way.

### Summary of the invention

Such problem is solved, according to the invention, by a process which comprises the steps of:
a) preparing a dough comprising flour, water and baker's yeast,
b) letting the dough rest,
c) forming from said dough portions of about 140-230 g,
d) making said portions leaven in predetermined conditions of temperature and moisture,
e) forming from said portions respective disks of dough,
characterized in that said step b) of dough resting is carried out at 5-30 °C for 3-12 hours and in that said dough disks are formed by subjecting said dough portions to compression under a load of at least 350 kg between two plates heated at a temperature of 150-210 °C for a time comprised between 0.1 and 2 seconds.

The dough disks so obtained may be then supplied as such to the deep-freezing step or first of all to a pre-baking step and then to the deep-freezing or to the vacuum or modified atmosphere packaging step. In this case, the consumer will take care of adding a topping to the pre-baked dough base and of completing the baking in oven.

Alternatively, according to the present process, it is possible to add a topping to the pre-baked dough disks and then subject them to deep-freezing or vacuum or modified atmosphere packaging.

In this case, the consumer will only have to carry out the completion of the baking in oven of the already garnished pizza.

Preferably, the resting step of the dough is carried out at a temperature of 18-20 °C for 4-7 hours.

The compression step of the dough is conveniently carried out by subjecting the dough to a load of 450-600 kg between two plates heated up at 180-200°C.

The conditions in which the resting step of the dough is carried out guarantee the creation of an alveolation suited for the purposes of the present invention, which is in turn responsible of the relevant crispness of the oven-baked pizza base.

Also the hot pressing step of the portions of dough concurs in a significant way to the achievement of the high crispness of the final pizza base.

During the hot pressing step, a consistent evaporation of the water bound to the gluten of the superficial layers takes place, with an extensive breaking of the gluten chains, what significantly concurs to increase the crispness of the dough base.

Furthermore, the superficial hardening of the dough disks following the hot pressing step avoids the elastic recovery of the dough and guarantees the preservation of the shape imparted to the disks.

The process according to the present invention allows to obtain a pizza comprising a dough base, having a central portion and a rim, the rim having a greater thickness than the central portion, and a topping that covers said central portion leaving said rim free.

As a result of the baking in oven, the ratio between the moisture content of the base at the rim and that of the entire base is at least 0.55, the alveolation of the dough is equal at least to 40 % and the average stress at break at the rim is lower or equal to 0.5 kg.

The alveoli which appear in the structure of the base have an area larger than 1 mm² in the majority of cases and more than 30 % of them have an area larger than 10 mm².

The base has a rather low content of baker's yeast, generally below or equal to 1 %, preferably 0.05 - 0.3 %.

The pizza obtained by the process according to the present invention has a remarkable lightness and a quite crispy consistency at the surface thereof and a soft consistency inside it. The lightness is essentially due to the high alveolation whereas the crispness is due to the great area of the alveoli, which are also very indented. The inner softness of the pizza is instead a function of the relatively high ratio between the moisture content of the base at the rims and that of the overall base, which is a clue of a more homogeneous diffusion of the moisture inside the entire mass of the dough with respect to what happens in the pre-baked deep-frozen pizzas known to date.

According to a further aspect thereof, the present invention relates to an apparatus for carrying out the above-described process.

Such an apparatus will be described hereinafter with reference to the attached drawings in an illustrative and non limiting way.

### Brief description of the drawings

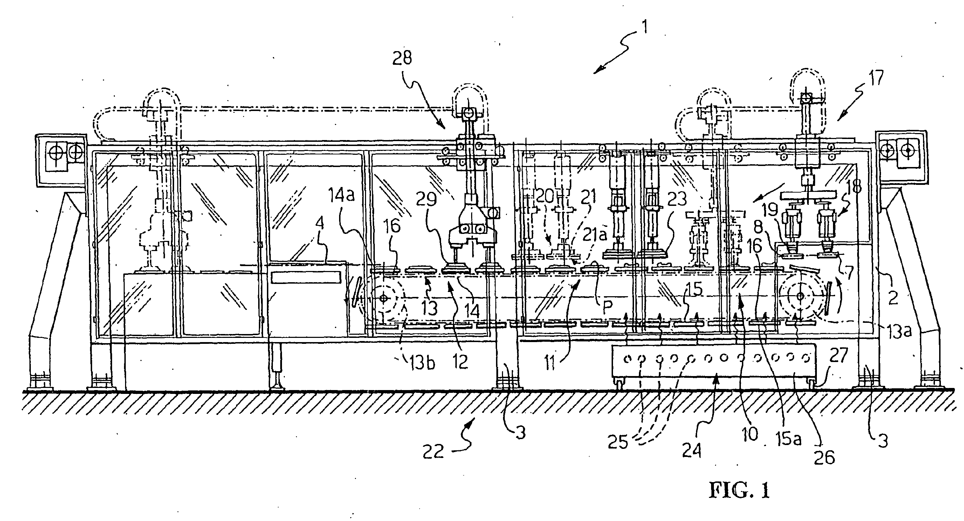

Figure 1 represents a schematic elevation front view of an apparatus according to the invention;
Figure 2 represents a schematic plan view of the apparatus of figure 1;

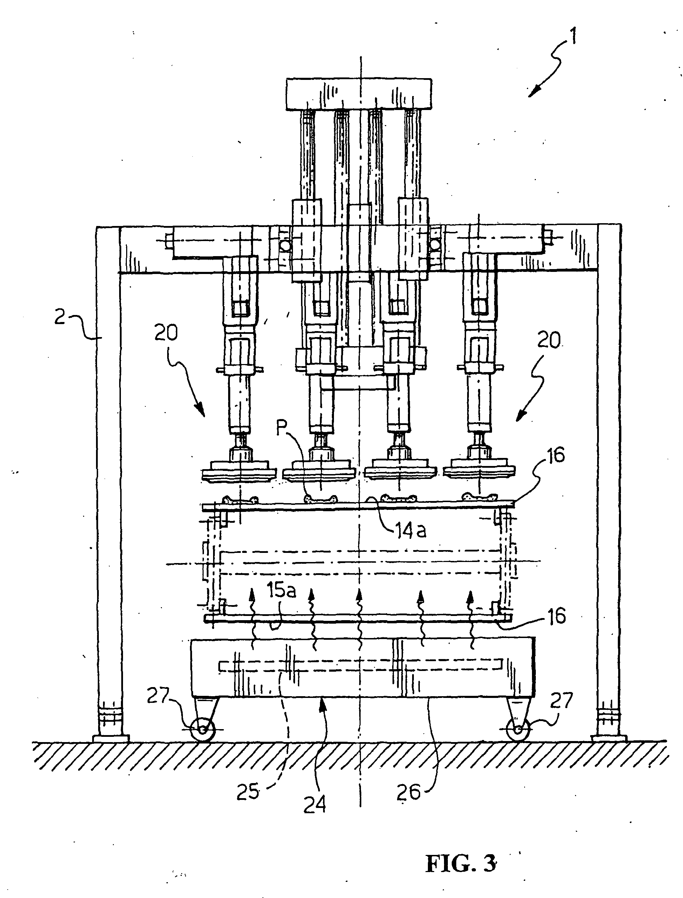

Figure 3 represents a schematic cross-section view of the apparatus of figure 1;

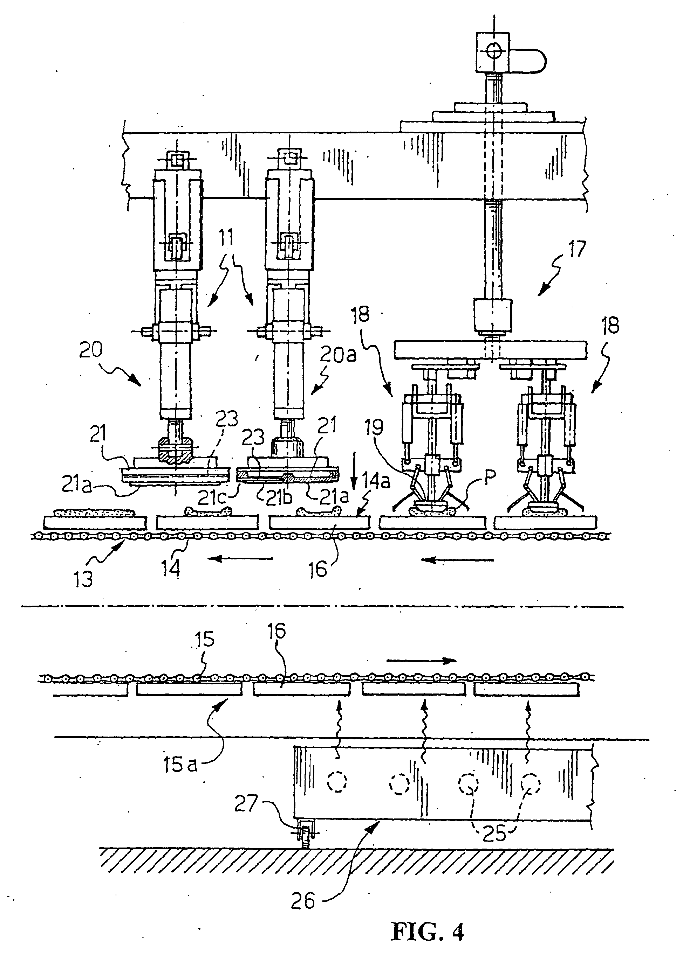

Figure 4 represents a front view of a detail of the apparatus of figure 1 in an enlarged scale.

### Detailed description

With reference to the attached figures, an apparatus for treating products such as dough portions P is indicated in its whole with numeral 1, apparatus which is for preparing dough disks intended for forming pizza bases.

The apparatus 1 comprises a substantially parallelepipedal metal frame 2, extending in a longitudinal horizontal direction x-x and standing on legs 3.

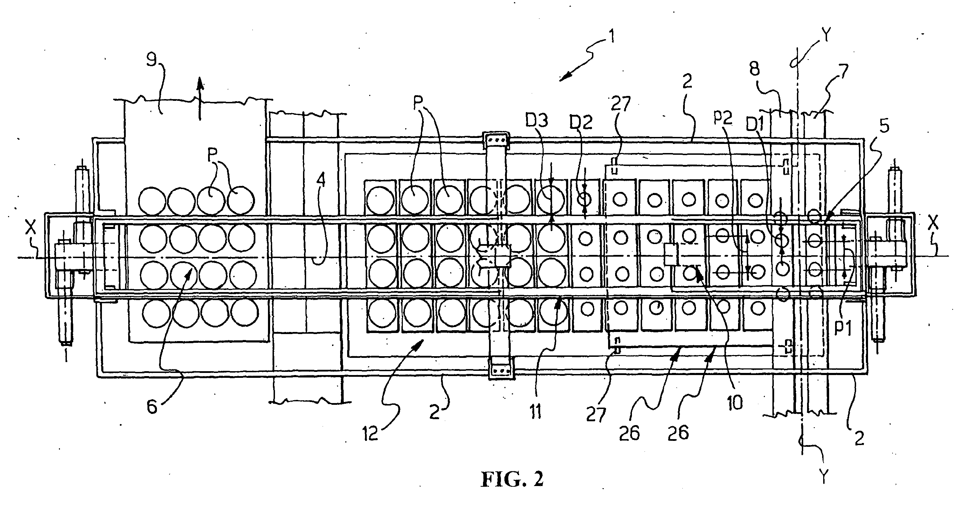

Apparatus 1 comprises a path 4 for the product P to be treated, extending along the frame 2 in the x-x direction between an input station 5 for the products P to be treated, i.e. dough portions, and an output station 6 for the treated products P, i.e. dough disks (see in particular fig. 2).

Station 5 consists of the end of a pair of conveyors belts 7 and 8 arranged side-by-side, extending in a cross direction y-y perpendicular with respect to x-x, said end being inside the frame 2.

Within the station 5, the products P are arranged in two groups of four products each, a respective group on each belt, aligned with a reduced pitch p1, for example equal to 250 mm, and in the form of small round loaves of dough of small diameter D1, for example equal to 110 mm.

The station 6 is comprised of the end of a quite wide conveyor belt 9, extending in the y-y direction, said end being inside the frame 2.

In the station 6, the treated products P are arranged, in conditions of process in steady operation state, in four groups of four products, said four groups being arranged side-by-side, wherein in each group the products are arranged aligned with a great pitch p2, for example equal to 330 mm, and in the form of dough disks of great diameter, such as for example D3 = 290 mm.

The apparatus 1 comprises, between the stations 5 and 6, a positioning station 10, a compression station 11 and a pickup station 12 for the pressed bases.

The stations 10 and 11 are located at a chain conveyor 13, having an active branch 14 and a return branch 15, strained between an idle pulley 13a and a driving pulley 13b.

The chain conveyor 13 comprises a plurality of plates 16 of Teflon-coated aluminium. The plates 16, which are arranged along the active branch 14, have surfaces 14a at a slightly lower level than that of belts 7 and 8 and at the same level of the belt 9, said surfaces 14a being provided for supporting the products P.

The plates 16 which are located along the return branch 15 have surfaces 15a which are facing the ground, at a predetermined distance therefrom.

The positioning station 10 is aided by a per se conventional manipulator, equipped with eight catch and release heads 18, for the transfer of the products P from the belts 7 and 8 to two plates 16 of a plurality of plates 16 associated with the chain conveyor 9.

The manipulator 17 is provided with per se conventional means for spacing the heads 18 from one another, operating upon passage of the products P from the belts 7 and 8 to the chain conveyor 9.

It shall be noticed that each head 18 incorporates a respective small press 19, operating at the positioning of each product onto a respective plate 16, in order to pre-compress the product P, thus increasing its diameter up to a diameter D2 equal to 120 mm.

The compression station 11 comprises two rows of four presses 20 each. Each press is provided with a plate 21 made of aluminium, having a surface 21a to be put into contact with a product P for exerting a force of at least 350 kg and preferably about 450-600 kg.

It shall be noticed that each press is provided with stroke stop means 20a for stopping the plate 21 of the press 20 at a predetermined distance from the plate 16 of the chain conveyor 13, preferably equal to 2 mm.

It shall also be noticed that the surface 21a of each plate 21 has a main central part 21b, which is circular and flat, aimed at forming the central portion of the pizza base, and an annular, peripheral recess 21c, of a predetermined depth, for example 5 mm, aimed at forming the rim.

Heating means 22 complete the compression station 11. More precisely, the heating means 22 comprises a resistor 23 associated to each plate 21 for heating its surface 21a up to a temperature of 150-210°C.

According to the invention, the heating means 22 comprises also radiating heating means 24 for heating the plates 16.

In particular heating means 24 comprises a battery of twenty-one infrared lamps, all indicated with numeral 25, housed within a box-shaped body 26, open to the upside, and located below the return branch 15 on the side of the belts 7 and 8, between adjacent legs 3 of the frame. Each lamp 25 is of a commonly marketed type, such as for example that marketed by the firm Heraeus. Each lamp has a power of about 5 kW. As a result, there is achieved an overall power of the infrared heating means equal to about 105 kW.

The lamps 25 are arranged in proximity of the surfaces 15a of the plates 16 of the chain conveyor, which are located along the return branch, for heating the surfaces 15a of the plates themselves up to a temperature of about 150-210°C.

Advantageously, the box-shaped body 26 is provided in the form of a trolley, thanks to the provision of wheels 27, for its drawer-wise extraction in y-y direction, from the frame 2, as required.

A manipulating unit 28, conventional in itself, is foreseen for catching the products P from the plates 16 of the chain conveyor 13 and for their deposition onto the output station 6 onto the belt 9, eight products P being handled at any one time, thanks to corresponding catching heads indicated with numeral 29, substantially through sucking, for example by means of suction cups.

In operation, the products P arriving on the belts 7 and 8 are picked up by means of the manipulator 17 and are laid down onto the plates 16. In the passage, the pitch of the products P is increased from 250 mm to 350 mm.

While being laid, the products P are subjected by the small presses to a force of 10 kg with an increase of the diameter to 120 mm and an escape of air from the dough.

Each product P is then brought by the conveyor to the compression station 11 where it is subjected to a force of about 450-600 kg by the presses 20. During compression, the dough is heated at its surface by the surfaces 21a and 15a of the plates 16 and 21, thus obtaining a superficial stiffening of the dough.

Each product P is then brought by the chain conveyor 13 to the station 6. The manipulation unit 28 provides for the pickup of the products P from the chain conveyor 13 and for their deposition onto the output station 6, onto the belt 9.

It shall be noticed that, for an increased productivity of the apparatus, the chain conveyor 13 runs continuously and that, accordingly, the small presses and the presses, when actuated, are moved to follow the conveyor at the same speed thereof.

The main advantage of the apparatus according to the present invention resides in the unexceptionable organoleptic characteristics of crispness and softness conferred to the final product, thanks to the high temperature pressing exerted onto the products P.

Further on, it shall be noticed that the apparatus according to the present invention is quite convenient as far as its productivity is concerned, thanks to the continuous and constant motion of the chain conveyor.

Finally, it shall be stressed that the infrared heating means are favorable from the environmental and hygienic point of view, this being a not negligible advantage for an apparatus intended for being used in the field of food products.

The present invention will be further illustrated with a non limiting example of production of a base for pizza by means of the process and apparatus of the present invention.

### Example

A dough for pizza was prepared starting from the following ingredients

| (parts in weight): | |
|---|---|
| 0 type wheat flour | 100 |
| Water | 51 |
| Salt | 2 |
| Seed-oil | 3 |
| Malt | 1 |
| Baker's yeast | 0.1 |

The above indicated ingredients are mixed until a homogenous dough is obtained, that is left to rest for 5 hours at a temperature of 20 °C, whereupon it is fed to a dividing machine in order to be subdivided in portions weighing about 180 g.

These are fed to a leavening cell, in which they are left for about 45 minutes at a temperature of 33 °C and a relative moisture of 55 %.

Exiting from the leavening cell, the portions of leavened dough, in the form of substantially semispherical loaves, are laid down onto conveyor belts 7 and 8 and are directed to the arrival station 5 of the apparatus 1 according to the invention. Here, they are taken by the manipulator 17 by means of its head 18, which provides also for releasing them onto respective plates 16 of the chain conveyor 13. These plates are heated up to about 190°C by the infrared lamps 25 housed within the box-shaped body 26 located below the return branch 15 of the conveyor. This transfers the loaves to the compression station 11, wherein the press 20 compresses them against the respective plates 16, by means of its plate 21 heated at about 190°C, by exerting a force of 500 kg for 0.5 seconds.

As a result of such hot pressing, dough disks are obtained with a maximum diameter of about 29 cm, which have a thickness of about 2 mm at their central portion and of about 5 mm at their rim.

The dough disks so obtained are finally picked by means of the manipulation unit 28 up, which afterwards lays them down onto the output station 6, onto the belt 9.

The dough disks are at this point forwarded to the usual steps of oven pre-baking, topping addition, deep-freezing and packaging.

The pizzas so prepared were compared with pre-baked deep-frozen pizzas prepared in a conventional way, that is to say prepared starting from bases obtained by rolling the starting dough.

More precisely, the pizzas used for the comparison had been prepared starting from a dough comprising the same ingredients of the dough of the preceding example and in the same proportions, with just a difference regarding the amount of yeast, which was equal to 1.5 part by weight, with a corresponding reduction of the parts by weight of flour equal to the increase of those of yeast. This variation was introduced, because the pizza bases prepared according to the prior art contain yeast in amounts around 1.5-3 %.

The dough was then subjected to the on-line direct processing without any resting step. The steps of dough dividing and leavening had been carried out identically to the preceding example, whereas the dough disks had been formed by rolling the dough loaves.

Finally, the steps of oven pre-baking, topping addition, deep-freezing and packaging had been carried out identically to the preceding example. The topping was both qualitatively and quantitatively identical to that of the example according to the invention.

A certain number of pizzas prepared according to the invention and of comparison pizzas were then unfrozen and baked in oven at the same experimental conditions (30 minutes of unfreezing at room temperature and 10 minutes of oven baking at 200 °C) whereby the following comparative tests were carried out onto the final baked pizzas.

### 1. Evaluation of moisture

The moisture of the base of the pizzas was determined at the rim and on the entire pizza.

In order to determine the moisture at the rims, the rim of a certain number of pizzas was isolated and was subjected to fine grinding.

In order to determine the moisture of the entire base, the topping of a certain number of pizzas was completely removed and the base was then subjected to fine grinding.

The samples so obtained were then maintained for 24 hours under vacuum in a stove at a temperature of 60 °C.

The results obtained are summed up in table 1, which reports average values obtained by two pizzas of each type (a pizza according to the invention and a pizza of comparison, respectively).

**Table 1**

| | Invention | Comparison |
|---|---|---|
| Entire base | 42.00 | 47.01 |
| | standard deviation 5.38 | standard deviation 3.34 |
| Rim | 26.05 | 20.12 |
| | standard deviation 0.69 | standard deviation 2.21 |

As can be seen from the table, the ratio between the moisture in correspondence of the rim and the moisture of the overall base is equal to 0.62 for the pizza according to the invention and only 0.43 for the pizza of comparison.

### Evaluation of the alveolation

The alveolation of the base of the pizza according to the invention and that of the pizza of comparison was evaluated with the help of an image scanner HP SCANJET 6100 C, using as acquisition and preprocessing software ADOBE PHOTOSHOP 5.5 and as image analysis software IMAGE PROPLUS 3.0, Mediacybernetics.

The tests started from pizzas prepared with the same procedures used in the evaluation of the moisture (unfreezing, oven baking and removal of the topping).

Each pizza was cut in two halves along a diameter and from each half five slices were cut out by means of an electric knife, paying attention to their spatial representativeness and to the perfect linearity of the cut.

The five slices were placed vertically onto the digitalization plane, i.e. using the cut surface as supporting surface, and on each of them a digitalization of the image at 600 dpi was carried out, in scale of gray.

As a result of further suitable image elaboration, it has been possible to obtain precise information about the peculiar characteristics of the alveoli present in the base of the pizzas according to the invention and of those of comparison, that is to say their number, area, perimeter and "roundness". From the ratio of the total area of the alveoli with respect to the total area of the image, an alveolation index was obtained.

The results obtained are summed up in following table 2

**Table 2**

| | Invention | Comparison |
|---|---|---|
| Number of alveoli per cm² | 29.8 | 54.4 |
| Alveolus average area (mm²) | 1.434 | 0.658 |
| Area range (mm²) | 0.052-59.50 | 0.050-19.337 |
| Alveolus average perimeter (mm) | 5.617 | 3.643 |
| Average roundness | 2.56 | 2.07 |
| % alveolation | 42.8 | 35.8 |
| % of alveoli with area < 0.5 mm² | 4.7 | 9.5 |
| % of alveoli with 0.05 < area < 0.25 mm² | 7.5 | 21.0 |
| % of alveoli with 0.25 < area < 1 mm² | 23.0 | 29.5 |
| % of alveoli with 1 < area < 5 mm² | 27.0 | 24.4 |
| % of alveoli with area > 10 mm² | 37.8 | 15.6 |

The results regard 30 sections obtained from two samples for each type of pizza and relate to the average of the evaluations.

As it can be noted from table 2, the alveoli of the pizza according to the invention, although less numerous, are on average larger that those of the pizza of comparison (more than the double), so that the overall extension of the alveolation is about 42 % vs about 36 % of the pizza of comparison. As a result, a higher "lightness" of the pizza at tasting is achieved.

The higher "roundness" index is indicative of a lower roundness of the alveoli, that is to say of a higher indentation thereof, indicative of a less "gummy" behaviour, more "crispy" at cutting and at tasting.

This is further confirmed by the distribution of the alveoli in area classes: the pizza according to the invention has a greater number of alveoli of large size (classes > 1 mm²) and hence a structure characterized by big irregular bubbles, which render it more sensitive to compression. The finer alveolation structure of the pizza of comparison could be a clue of a more elastic and soft rheological behaviour.

### Evaluation of consistency

The evaluation of the consistency of the base of the pizza according to the present invention and that of the pizza of comparison was carried out with the aid of an instrument Instron Universal Machine 4301, using IX Series Automated Materials Testing System as software for data acquisition and processing.

The analysis was carried out on two pizzas of each type (according to the invention and of comparison, respectively) prepared according to the procedures illustrated in the foregoing.

The rim of each pizza was penetrated in three points spaced about 7 cm from one another with a punch of 0.65 cm of diameter, letting it fall from a distance of 5 cm from the support plane with a speed of 20 mm/min.

From the force/displacement graphs obtained it has been possible to calculate the height of the rim in the point of compression, the load in the crack point and the maximum load.

The results obtained are summed up in table 3

**Table 3**

| | Rim height (mm) | Breaking load (kg) | Maximum load (kg) |
|---|---|---|---|
| Invention | 15.76 | 0.39 | 0.49 |
| Comparison | 14.19 | 0.63 | 0.85 |

The rim of the pizza according to the invention is more susceptible to deformation and soft both in terms of breaking load and of maximum load. This can be related to the previously exposed results regarding the moisture and the alveolation; the pizza according to the invention has a higher content of moisture and exhibits alveoli of greater dimension.

## Claims

1. A process for the production of a pizza, which comprises the steps of:
a) preparing a dough comprising flour, water and baker's yeast,
b) letting the dough rest,
c) forming from said dough portions of about 140-230 g,
d) making said portions leaven in predetermined conditions of temperature and moisture,
e) forming from said portions respective disks of dough,
**characterized in that** said step b) of dough resting is carried out at 5-30 °C for 3-12 hours and **in that** said dough disks are formed by subjecting said dough portions to compression under a load of at least 350 kg between two plates heated at a temperature of 150-210 °C for a time comprised between 0.1 and 2 seconds.

2. A process according to claim 1, comprising the further step of directing said dough disks to a pre-baking step.

3. A process according to claim 2, comprising the further step of subjecting said dough disks to deep-freezing or to vacuum- or modified atmosphere-packaging.

4. A process according to claim 2, comprising the further steps of adding a topping to said dough disks and subjecting them to deep-freezing or vacuum- or modified atmosphere-packaging.

5. A process according to any one of claims 1 to 4, wherein said step b) of resting of the dough is carried out at a temperature of 18-20 °C for 4-7 hours.

6. A process according to any one of claims 1 to 5, wherein said compression step of the dough is carried out by subjecting the dough to a load of 450-600 kg.

7. A process according to claim 6, wherein said plates are heated at 180-200 °C.

8. An apparatus (1) for treating dough portions intended for forming bases for pizza, comprising a forming station (11) in which a press (20) is active for forming the portions between two plates (16, 21),wherein said apparatus (1) comprises at least a press (20) provided with a plate (21) and a chain conveyor (13) equipped with a plurality of plates (16) moved through said forming station (11) to position the plates (16) below the plate (21) of the press (20), and heating means (22) of the plates (16, 21), **characterized in that** the press (20) is moved so to follow the chain conveyor (13) at the same advancing speed.

9. An apparatus (1) according to claim 8, **characterized in that** the heating means (22) of the plate (21) of the press (20) comprises at least a resistor (23) associated to the plate (21) of the press (20).

10. An apparatus (1) according to claim 9, **characterized in that** the heating means (22) of the plates (16) comprises radiating heating means (24) associated to the plates (16) of the chain conveyor (13).

11. An apparatus (1) according to claim 10, **characterized in that** the radiating heating means (24) comprises a plurality of lamps (25), facing the plates (16) of the chain conveyor (13) which are arranged in the return branch (15) of the conveyor (13).

12. An apparatus (1) according to claim 11, **characterized in that** the plurality of lamps (25) has a power of at least 65 kW in its whole.

13. An apparatus (1) according to claim 8, **characterized in that** it comprises stop means (20a) of the stroke of the press (20), in order to stop the plate (21) of the press (20) at a predetermined distance from the plate (16) of the chain conveyor (13).

## Patentansprüche

1. Verfahren zur Herstellung einer Pizza, das folgende Schritte umfasst:
a) Herstellen eines Teigs, der Wasser, Mehl und Bäckerhefe umfasst,
b) Ruhenlassen des Teigs,
c) Bilden von Portionen mit ca. 140 bis 230 g aus dem Teig,
d) Gehenlassen der Portionen unter vorbestimmten Bedingungen bezüglich Temperatur und Feuchtigkeit,
e) Bilden von jeweiligen Teigscheiben aus den Portionen,
**dadurch gekennzeichnet, dass** der Schritt b) des Ruhenlassens des Teigs 3 bis 12 Stunden lang bei 5 bis 30 °C ausgeführt wird und die Teigscheiben gebildet werden, indem die Teigportionen für eine Dauer von 0,1 bis 2 Sekunden einem Druck mit einer Last von mindestens 350 kg zwischen zwei Platten unterworfen werden, die auf eine Temperatur von 150 bis 210 °C aufgeheizt sind.

2. Verfahren nach Anspruch 1, den weiteren Schritt umfassend, die Teigscheiben zu einer Vorbackstufe zu führen.

3. Verfahren nach Anspruch 2, den weiteren Schritt umfassend, die Teigscheiben einem Tiefkühlen oder einem Vakuumverpacken oder einem Verpacken unter modifizierter Atmosphäre zu unterziehen.

4. Verfahren nach Anspruch 2, die weiteren Schritte umfassend, die Teigscheiben mit einer Garnierung zu versehen und sie einem Tiefkühlen oder einem Vakuumverpacken oder einem Verpacken unter modifizierter Atmosphäre zu unterziehen.

5. Verfahren nach einem der Ansprüche 1 bis 4, bei dem Schritt b) des Ruhenlassens des Teigs 4 bis 7 Stunden lang bei einer Temperatur von 18 bis 20 °C erfolgt.

6. Verfahren nach einem der Ansprüche 1 bis 5, bei dem der Schritt der Druckbelastung des Teigs erfolgt, indem der Teig mit einer Last von 450 bis 600 kg beaufschlagt wird.

7. Verfahren nach Anspruch 6, bei dem die Platten auf 180 bis 200 °C aufgeheizt sind.

8. Vorrichtung (1) zum Behandeln von Teigportionen, die zur Bildung von Pizza-Unterlagen gedacht sind, mit einer Formstation (11), in der eine Presse (20) wirkt, um die Portionen zwischen zwei Platten (16, 21) zu formen, wobei die Vorrichtung (1) zumindest eine mit einer Platte (21) versehene Presse (20) und einen mit einer Vielzahl von Platten (16) ausgestatteten Kettenförderer (13) umfasst, der die Formstation (11) durchläuft, um die Platten (16) unter der Platte (21) der Presse (20) zu positionieren, und mit einer Heizeinrichtung (22) für die Platten (16, 21), **dadurch gekennzeichnet, dass** die Presse (20) so bewegt wird, dass sie dem Kettenförderer (13) mit derselben Vorrückgeschwindigkeit folgt.

9. Vorrichtung (1) nach Anspruch 8, **dadurch gekennzeichnet, dass** die Heizeinrichtung (22) der Platte (21) der Presse (20) wenigstens einen Widerstand (23) umfasst, der der Platte (21) der Presse (20) zugeordnet ist.

10. Vorrichtung (1) nach Anspruch 9, **dadurch gekennzeichnet, dass** die Heizeinrichtung (22) der Platten (16) eine Abstrahlheizeinrichtung (24) umfasst, die den Platten (16) des Kettenförderers (13) zugeordnet ist.

11. Vorrichtung (1) nach Anspruch 10, **dadurch gekennzeichnet, dass** die Abstrahlheizeinrichtung (24) eine Vielzahl von Lampen (25) umfasst, die den Platten (16) des Kettenförderers (13) zugewandt und am Rücklaufzweig (15) des Förderers (13) angeordnet sind.

12. Vorrichtung (1) nach Anspruch 11, **dadurch gekennzeichnet, dass** die Vielzahl von Lampen (25) eine Gesamtleistung von mindestens 65 kW hat.

13. Vorrichtung (1) nach Anspruch 8, **dadurch gekennzeichnet, dass** sie eine Anschlageinrichtung (20a) für den Hub der Presse (20) hat, um die Platte (21) der Presse (20) bei einem vorbestimmten Abstand von der Platte (16) des Kettenförderers (13) anzuhalten.

## Revendications

1. Procédé de production d'une pizza, comprenant les étapes suivantes :
a) préparer une pâte comprenant de la farine, de l'eau et de la levure de boulangerie,
b) laisser la pâte reposer,
c) former à partir de ladite pâte des portions d'environ 140 à 230 gr,
d) faire lever lesdites portions sous des conditions de température et d'humidité prédéterminées,
e) former à partie desdites portions des disques de pâte respectifs,
**caractérisé en ce que** ladite étape b) consistant à laisser la pâte reposer est exécutée à une température allant de 5 à 30°C pendant 3-12 heures et **en ce que** lesdits disques de pâtes sont formés en soumettant lesdites portions de pâte à une compression sous une charge d'au moins 350 kg, entre deux plaques chauffées à une température allant de 150 à 210°C pour un laps de temps compris entre 0,1 et 2 secondes.

2. Procédé selon la revendication 1, comprenant l'étape supplémentaire de diriger lesdits disques de pâte vers une étape de pré-cuisson.

3. Procédé selon la revendication 2, comprenant l'étape supplémentaire de soumettre lesdits disques de pâte à une surgélation ou à un emballage sous vide ou sous atmosphère contrôlée.

4. Procédé selon la revendication 2, comprenant les étapes supplémentaires d'ajouter une garniture auxdits disques de pâte et les soumettre à une surgélation ou à un emballage sous vide ou sous atmosphère contrôlée.

5. Procédé selon l'une quelconque des revendications 1 à 4, dans lequel ladite étape b) de laisser reposer la pâte est exécutée à une température allant de 18 à 20°C pendant 4 à 7 heures.

6. Procédé selon l'une quelconque des revendications 1 à 5, dans lequel ladite étape de compression de la pâte est exécutée en soumettant la pâte à une charge de 450 à 600 kg.

7. Procédé selon la revendication 6, dans lequel lesdites plaques sont chauffées à une température allant de 180 à 200°C.

8. Appareil (1) destiné à traiter des portions de pâte conçues pour former des bases de pizza, comprenant un poste de formage (11) dans lequel une presse (20) fonctionne pour former les portions entre deux plaques (16, 21), dans lequel ledit appareil (1) comprend au moins une presse (20) munie d'une plaque (21) et un transporteur à chaîne (13) équipé d'une pluralité de plaques (16) se déplaçant à travers ledit poste de formage (11) pour positionner les plaques (16) en dessous de la plaque (21) de la presse (20), et des moyens de réchauffement (22) des plaques (16, 21), **caractérisé en ce que** la presse (20) est déplacée de manière à suivre le transporteur à chaîne (13) à la même vitesse de progression.

9. Appareil (1) selon la revendication 8, **caractérisé en ce que** les moyens de réchauffement (22) de la plaque (21) de la presse (20) comprennent au moins une résistance (23) associée à la plaque (21) de la presse (20).

10. Appareil (1) selon la revendication 9, **caractérisé en ce que** les moyens de réchauffement (22) des plaques (16) comprennent des moyens de chauffage par rayonnement (24) associés aux plaques (16) du transporteur à chaîne (13).

11. Appareil (1) selon la revendication 10, **caractérisé en ce que** les moyens de chauffage par rayonnement (24) comprennent une pluralité de lampes (25) orientées vers les plaques (16) du transporteur à chaîne (13) qui sont disposées dans la branche de retour (15) du transporteur (13).

12. Appareil (1) selon la revendication 11, **caractérisé en ce que** la pluralité de lampes (25) a une puissance d'au moins 65kW dans son ensemble.

13. Appareil (1) selon la revendication 8, **caractérisé en ce qu'**il comprend des moyens d'arrêt (20a) de la course de la presse (20), afin d'arrêter la plaque (21) de la presse (20) à une distance prédéterminée de la plaque (16) du transporteur à chaîne (13).
